# EUROPEAN PATENT APPLICATION

(11) **EP 2 026 619 A1**
(43) Date of publication of application: **18.02.2009**
(21) Application number: 07291012.8
(22) Date of filing: 14.08.2007
(51) Int. Cl.: H04W 36/08

(54) **Handover method and apparatus in a wireless telecommunications network**

(71) Applicant: Alcatel Lucent, 75008 Paris (FR); LUCENT TECHNOLOGIES INC., Murray Hill NJ 07974-0636 (US)
(72) Inventor: Kumar Palat, Sudeep, Wiltshire SN5 6EE (GB); Casati, Alessio, Wiltshire SN5 5BG (GB); Godin, Philippe, 78220 Viroflay (FR)
(74) Representative: Cockayne, Gillian

(57) **Abstract**

In handover in a wireless telecommunications network, dummy packets, or data packets with an indicator bit, are transmitted from a gateway node MME/SAE GW 4 to a source node eNB 2 when there is no more data being sent to the source node 2. The source node 2 forwards them to a target node eNB 3. When the target node eNB 3 detects the indictors, it knows that there is no more data awaiting to be received from the source node 2 and it can continue with data sent from the SAE GW to it instead.

## Description

### FIELD OF THE INVENTION

The present invention relates to a method and apparatus for handover in a wireless telecommunications network, and more particularly, but not exclusively, to a method and apparatus implemented in accordance with the 3rd Generation Partnership Project (3GPP) evolved Universal Terrestrial Radio Access Network (E-UTRAN) and evolved Universal Terrestrial Radio Access (E-UTRA) specifications.

### BACKGROUND OF THE INVENTION

Currently, 3GPP is considering development of E-UTRA and E-UTRAN as set out in the technical specification 3GPP TS 36.300 v 8.1.0 (2007- 06), incorporated herein by way of reference, and related documents. 3GPP Long Term Evolution (LTE) aims to enhance the Universal Mobile Telecommunications System (UMTS) standard, for example, by improving efficiency and services.

In E-UTRAN, user equipment (UE) communicates with a network node, NodeB (eNB), with data being sent on radio bearers (RBs) over a radio link between them. The eNB interfaces with a Mobile Management Entity/Ssytem Architecture Evolution Gateway (MME/SAE GW) via an interface designated as S1. An E-UTRAN network includes a plurality of eNBs and MME/SAE GWss.

In LTE, all the Radio Access Network (RAN) functions are integrated in each node, eNB. Downlink user data, that is Internet Protocol (IP) packets are transmitted from the SAE GW to the eNB. As the UE is handed over from a first, source, eNB to another, target, eNB, the SAE GW is updated with the current location eNB of the UE and the SAE GW starts to send data to the target eNB.

However, to avoid data loss any data that is already buffered in the source eNB must be forwarded to the target eNB. Also, data that has been sent to the source eNB during the handover (HO) procedure, before the SAE GW is updated with the current location of the UE, is also forwarded by the source eNB to the target eNB.

To preserve the order of packets sent to the UE, the target eNB must first send data over the radio in the same order as sent by the SAE GW. That is, first data buffered by the eNB is sent to the target eNB, followed by data in transit from the SAE GW during the HO process, and only when these have all been sent can the target eNB send to the UE fresh data that it receives directly from the SAE GW.

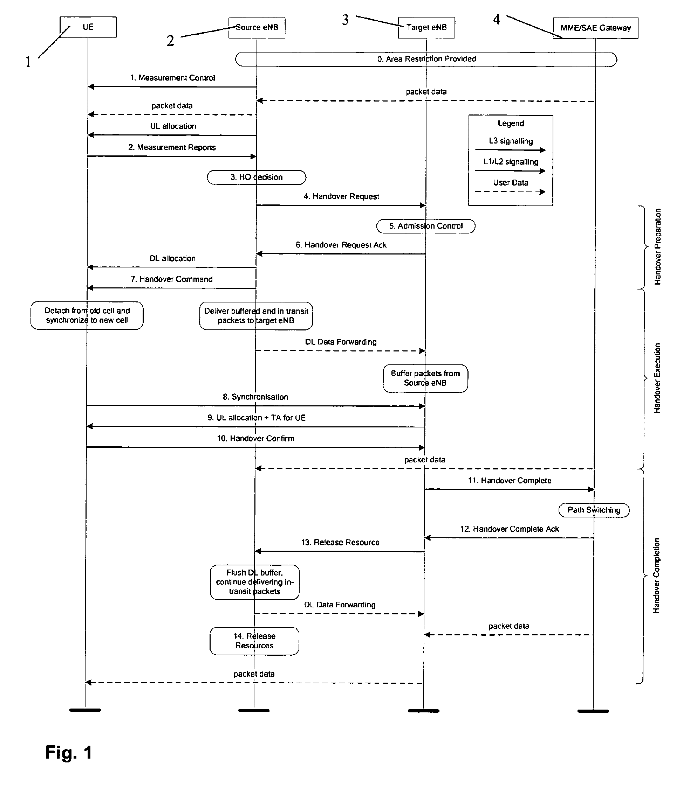

The message flow for the HO process applied to a UE 1 is shown in Figure 1 which illustrates a network including a source eNB 2, a target eNB 3 and an MME/SAE GW 4. When the source eNB 2 makes a handover decision based on measurement reports from the UE 1, it sends a Handover Request message to the target eNB 3. At the Admission Control step 5, the target eNB 3 configures the required resources and sends a Handover Request Acknowledge message to the source eNB 2. Following the handover command from the source eNB 2 to the UE 1, the UE 1 detached from the old cell and synchronises to the new cell associated with the target eNB 3. Also, data packets buffered at the source eNB 2 and any in transit are forwarded to the target eNB 3. Following the handover confirm message at step 10 from the UE 1 to the target eNB 3, a handover completion message is sent to the MME/SAE GW 4 by the target eNB 3. Data packets from the source eNB 2 continue to be delivered to the target eNB 3. The target eNB can then send fresh data arriving over S 1 from MME/SAE GW once all the forwarded data from source eNB 2 has been received by it. However, the source eNB 2 has no knowledge of which is the last packet. The SAE GW 4 also has already sent the last packet to the source eNB 2 when it receives the path switch message between steps 11 and 12.

One proposal under consideration by 3GPP to deal with this issue is to use a timer. The source eNB and target eNB wait for a certain time period for any data in transit. At the end of the time period, the source eNB stops sending data to the target eNB. The target eNB stops receiving data from the source eNB and starts sending data received from the SAE GW towards the UE. The start point of the timer is expected to be the sending of the HO Complete message (step 11) to the SAE Gateway. To use this mechanism, the timer must accommodate the worst case delay for: the HO Complete message to reach the MME; the MME to update the SAE Gateway; the SAE-Gateway to the source eNB data delay; and finally the delay from the source eNB to the target eNB. Since this involves several hops, with some hops possibly over long distances, the variation in total delay is potentially quite large. The timer must accommodate the worst possible delay variation. If the timer is set aggressively, any forwarded data that is not received by the target eNB after timer expiry will be discarded by the eNB.

### BRIEF SUMMARY OF THE INVENTION

According to a first aspect of the invention, a method for handover of a mobile terminal from a source node to a target node in a wireless telecommunications network, includes the steps of:
during a handover procedure, connecting a gateway element to send data packets intended for the mobile terminal to both the target node and to the source node, and the source node forwarding any data packets to the target node which sends them to the mobile terminal;
then connecting the gateway element to send data packets only to the target node;
sending an indicator from the gateway element to the source node to indicate when the gateway element is connected to send data packets only to the target node;
the source node forwarding the indicator to the target node;
and, when the target node receives the indicator, the target node sending to the mobile terminal data packets sent to the target node by the gateway element.

By using a method in accordance with the invention, it is not necessary to rely on a timer to estimate when data transfer is likely to have been completed, as the end of forwarded data may be directly indicated. This reduces the risk that data packets will be lost or duplicated during handover. The indicator may be included in at least one data packet sent from the gateway element to the source node, or alternatively, or additionally, the indicator is at least one dummy packet with no payload data. A plurality of data packets or dummy packets may be sent by the gateway element to ensure that the end of forwarded data is detected by the target node.

Thus, in method used in LTE, on receipt of the HO complete message, the SAE GW sends one, or more, packets with a special indicator, IE, to the source eNB. These packets are essentially dummy packets. The source eNB forwards them to the target eNB. Since these packets will be last one, or ones, sent to towards the source eNB, the target eNB starts sending fresh data from the SAE when it receives this indicator from the source eNB. This avoids the need to wait for a timer expiry and associated delay. This has potential to save on timing, since the proposed timer would need to be set for the worst case delay tolerance. This time saved reflects on the handover interruption time and latency of the packets arriving over S1.

In another method in accordance with the invention, the indicator IE could be piggybacked in the data packet sent to the source eNB after receipt of the HO complete message. This data packet would then be the last packet sent to the source eNB by the SAE GW.

A combination of these approaches could be used, say with data packets with an indicator being followed by multiple dummy packets, to enhance the possibility that the target node will detect them.

The method may be applied even if there is no incoming data during the HO procedure and also even if there is no buffered data in the source eNB. The connection of the gateway element to both the source and target nodes, and then subsequently to the target node alone, is detected when dummy packets are received by the target node.

In one method in accordance with the invention, a timer is used in conjunction with it, allowing optional implementation in the network nodes. The timer will act as a fall back if the target node does not detect the indicator. If the target node does receive the dummy packets before timer expiry, it can stop the timer and send data earlier to the mobile terminal. This may lead to a reduction of the handover interruption time by the order of 10ms or more. Given that typically HO interruption is of the order of 10ms, and that the packet latency over the radio is of the order of 6ms, this saving of 10ms is quite significant in terms of end user perception.

The method arose form considering a telecommunications network in accordance with Long Term Evolution (LTE) specifications but it may also be applied to networks in accordance with other standards or specifications.

According to a second aspect of the invention, a wireless telecommunications network operates in accordance with the inventive method.

According to a third aspect of the invention, a gateway element included in the network and includes a generator for generating a data packet having a last packet indication bit to provide the indicator. A gateway element could alternatively, or in addition, include a generator for generating a dummy packet having a message type identifying it as a dummy packet.

### BRIEF DESCRIPTION OF THE DRAWINGS

Some embodiments and methods in accordance with the invention are now described, by way of example only, and with reference to the accompanying drawings, in which:
Figure 1 schematically illustrates a prior art network and messaging during handover;
Figure 2 schematically illustrates a network and messaging during handover in accordance with the invention;
Figure 3 schematically illustrates an example of a previously known data packet;
Figure 4 schematically illustrates a data packet with an indicator in accordance with the invention; and
Figure 5 schematically illustrates a dummy packet in accordance with the invention.

### DETAILED DESCRIPTION OF THE DRAWINGS

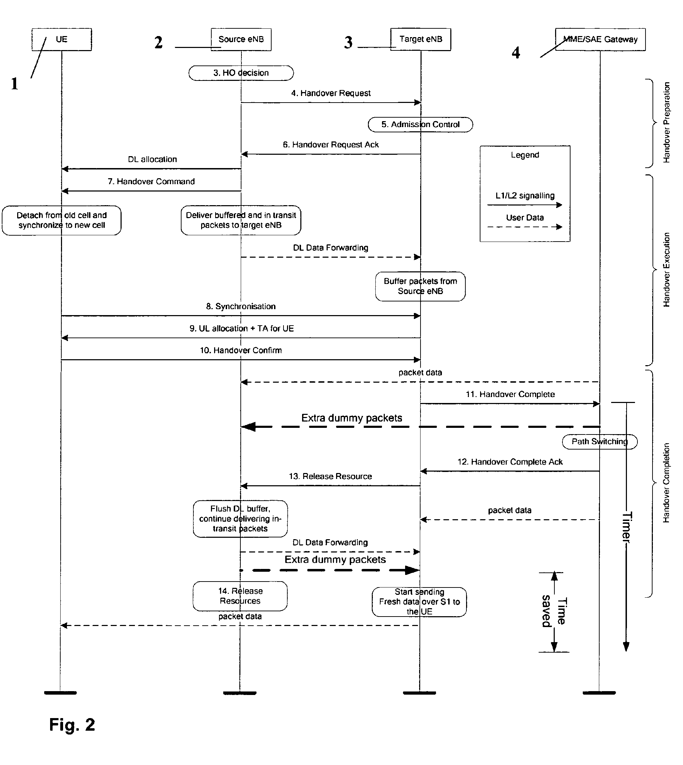

With reference to Figure 2, in an LTE telecommunications network, the handover process is similar to that shown in Figure 1 until the handover complete message is sent from the target node 3 to the SAE GW 4, as shown at step 11.

When the MME/SAE Gateway 4 receives the HO complete message, it sends a few dummy packets, produced by an indictor generator at the GW 4, to the source eNB 2. The dummy packets are then forwarded to the target eNB 3 by the source eNB 2. When the dummy packets are received by the target eNB 3, it knows that there are no further packets arriving over the source eNB 2 and can start sending data received over S 1 to the UE 1.

The start point of the timer is shown at step 11, with its maximum period being the extent of the arrow. As the dummy packets are received to indicate the end of the data flow, there is a time saving, which may be significant.

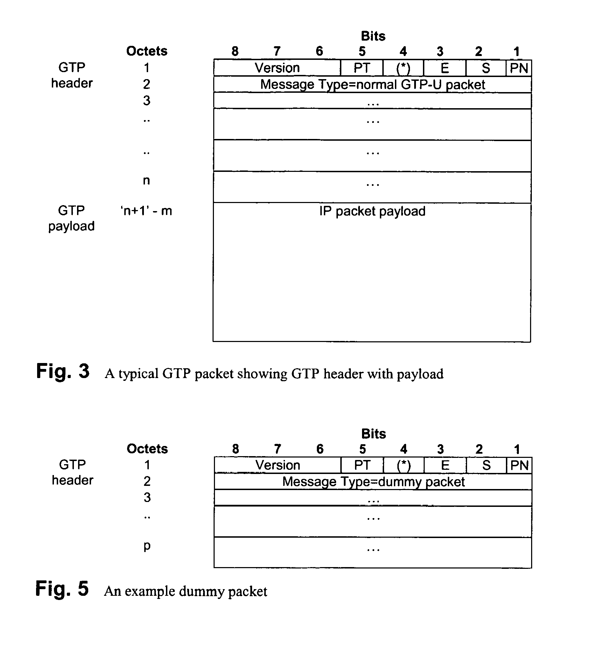

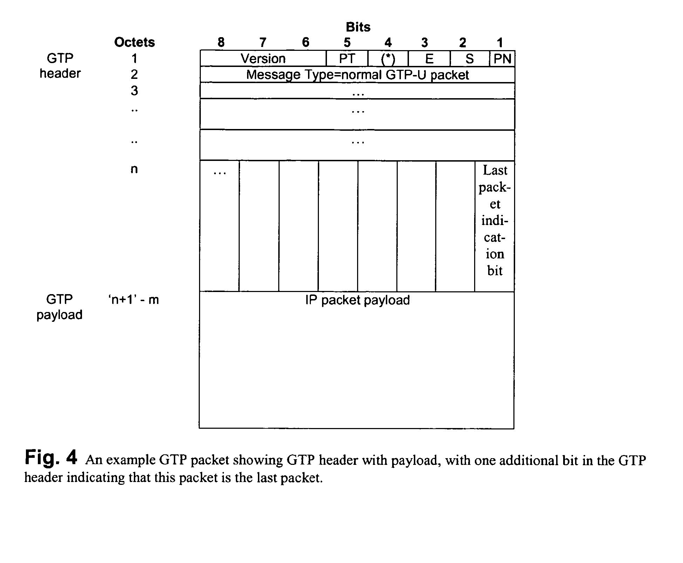

A representation of a typical GTP data packet is given in Figure 3. A GTP data packet with an indicator is shown in Figure 4, a last packet indictor bit being included as part of the header. The data packet type shown in Figure 4 may be used to indicate the end of forwarded data. The message type for the packets of Figures 3 and 4 is both shown as a normal GTP-U packet type.

Figure 5 illustrates a dummy packet, with the header type identigying it as such , and carrying no data payload.

The present invention may be embodied in other specific forms and implemented in other methods without departing from its spirit or essential characteristics. The described embodiments and methods are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method for handover of a mobile terminal from a source node to a target node in a wireless telecommunications network, including the steps of:
during a handover procedure, connecting a gateway element to send data packets intended for the mobile terminal to both the target node and to the source node, and the source node forwarding any data packets to the target node which sends them to the mobile terminal;
then connecting the gateway element to send data packets only to the target node;
sending an indicator from the gateway element to the source node to indicate when the gateway element is connected to send data packets only to the target node;
the source node forwarding the indicator to the target node;
and, when the target node receives the indicator, the target node sending to the mobile terminal data packets sent to the target node by the gateway element.

2. The method as claimed in claim 1 and including adding the indicator to at least one data packet sent from the gateway element to the source node.

3. The method as claimed in claim 1 or 2 wherein the indicator is at least one dummy packet with no payload data.

4. The method as claimed in any preceding claim wherein the telecommunications network is in accordance with Long Term Evolution (LTE) specifications.

5. The method as claimed in any preceding claim wherein the indicator is sent from the gateway to the source node after it receives a message from the target node that the handover is complete.

6. The method as claimed in claim 5 and wherein the gateway element sends the indicator between receiving a message from the target node that the handover is complete and sending a message to the target node acknowledging that handover is complete.

7. The method as claimed in any preceding claim and including, after a predetermined time period from when the target node sends a message to the gateway element that handover is complete, the target node sending to the mobile terminal data packets received by it from the gateway element.

8. A wireless telecommunications network operating in accordance with any preceding claim.

9. A gateway element included in the network of claim 8 and including a generator for generating a data packet having a last packet indication bit to provide the indicator.

10. A gateway element included in the network of claim 8 and including a generator for generating a dummy packet having a message type identifying it as a dummy packet.
